# EUROPÄISCHE PATENTSCHRIFT

(11) **EP 1 341 640 B1**
(45) Veröffentlichungstag und Bekanntmachung des Hinweises auf die Patenterteilung: **06.04.2005**
(21) Anmeldenummer: 01270400.3
(22) Anmeldetag: 14.12.2001
(51) Int. Cl.: B23K 35/38

(54) **SCHUTZGAS UND VERFAHREN ZUM LICHTBOGENSCHWEISSEN**
SHIELDING GAS AND ARC-WELDING METHOD
GAZ INERTE ET PROCEDE DE SOUDAGE A L'ARC

(30) Priorität: 15.12.2000 DE 10062564
(43) Veröffentlichungstag der Anmeldung: 10.09.2003
(73) Patentinhaber: Linde Aktiengesellschaft, 65189 Wiesbaden (DE)
(72) Erfinder: TRUBE, Stefan, 35745 Herborn-Guntersdorf (DE); AMMANN, Thomas, 81379 München (DE)
(74) Vertreter: Gellner, Bernd, Dr.
(86) Internationale Anmeldenummer: PCT/EP2001/014801
(87) Internationale Veröffentlichungsnummer: WO 2002/047859

(56) Entgegenhaltungen:
- EP-A- 0 680 802
- EP-A- 0 949 041
- DD-A- 133 538
- US-A- 6 111 219

## Beschreibung

Die Erfindung betrifft ein Schutzgas zum Lichtbogenschweißen von metallischen Werkstücken. Die Erfindung betrifft femer ein Verfahren zum Lichtbogenschweißen von metallischen Werkstücken mit abschmelzender Elektrode, wobei ein Schutzgasstrom benachbart zur Elektrode dem Werkstück zugeführt wird.

In der industriellen Anwendung sind zahlreiche Schutzgase für das Schweißen von Metallen unter Schutzgas bekannt, wobei je nach der Zusammensetzung bzw, dem Material des zu schweißenden Werkstücks und/oder in Abhängigkeit von der Art des Schweißverfahrens unterschiedliche Schutzgase zum Einsatz kommen.

Das Schutzgasschweißen (SG-Schweißen) wird Im Hinblick auf die Art der verwendeten Elektrode in Metallschutzgasschweißen (MSG-Schweißen) mit abschmelzender Elektrode und Schweißverfahren mit nicht abschmelzender Elektrode wie das Wolfram-Inertgas-Schweißen (WIG-Schweißen) eingeteilt. Als Varianten des MSG-Schweißen sind bekannt und werden häufig angewendet das Metall-Aktivgas-Schweißen (MAG-Schweißen) oder das Metall-Inertgas-Schweißen (MIG-Schweißen).

Es werden von der Linde Gas AG beispielsweise zwei Schweißschutzgase unter den Bezeichnungen CRONIGON® He 50 S bzw. CRONlGON® He 30 S vertrieben. Diese Gasgemische enthalten 0,05 Vol.-% CO₂, 50 Vol.-% Helium, Rest Argon bzw. 0,05 Vol.-% CO₂, 30 Vol.-% Helium, 2 Vol.-% H₂, Rest Argon (vgl. beispielsweise Linde-Prospekt "Schweißschutzgase").

Die EP 949 041 beinhaltet ein Schutzgas zum WIG-Gleichstromschweißen von Aluminium, welches eine Mikrobeimischung an Stickstoff und optional zusätzlich an Kohlendioxid und /oder Sauerstoff enthält. Die US 6 111 219 beinhaltet eine Schutzgasmischung zum Schweißen von austenitischen, korossionsbeständigen Stählen mit nichtabschmelzender Elektrode, welche aus 2 bis 5 Vol.-% Kohlendioxid, 1 bis 4 Vol.-% Stickstoff und Argon besteht. Auch die EP 680 802 offenbart eine Schutzgasmischung zum Schweißen von austentischen Stählen. Diese Schutzgasmischung enthält 1 bis 2,8 Vol.-% Stickstoff, 1 bis 2,5 Vol.-% Kohlendioxid, 2 bis 16 Vol.-% Helium und Argon. Die Verwendung von Rohhelium zum Schutzgasschweißen ist Gegenstand der DD 133 538. Dem Rohhelium wird bis zu 17,5 Vol.-% Stickstoff zugegeben und wahlweise zusätzlich 5 bis 35 Vol.-% Argon und/oder 1 bis 20 Vol.-% Kohlendioxid.

Bestimmte hochwarmfeste Nickel-Basis-Legierungen und Sonderedelstähle wie z.B. alloy 602CA (Werkstoff-Nr. 2.4633) sind bisher nicht zufriedenstellend mit MIG/MAG-Verfahren schweißbar. Die Verwendung bekannter Schutzgase führt zu unzureichenden Ergebnissen und vor allem zu Inakzeptablen mechanisch-technologischen Eigenschaften der Schweißnähte.

Bei einer anderen Werkstoffgruppe auf Nickel-Basis, nämlich den hochkorrosionsbeständigen Legierungen wie z.B. alloy 59 (Werkstoff-Nr. 2.4605), führt das MIG/MAG-Schweißen dazu, dass die Korrosionsbeständigkeit der Schweißnaht zwar gegeben ist, jedoch nicht ganz diejenige des Grundwerkstoffes erreicht.

Der vorliegenden Erfindung liegt die Aufgabe zu Grunde, ein Schutzgas und ein Verfahren der eingangs genannten Art zur Verfügung zu stellen, wobei Verbesserungen oder Alternativen zu bekannten Schweißschutzgasen aufgezeigt werden. Aufgabe der Erfindung ist es ferner, Schweißschutzgase vorzuschlagen, mit denen rostfreie metallische Werkstoffe, insbesondere die erwähnten hochwarmfesten nickelbasierenden Legierungen, aber auch hochlegierte Stähle mit einem MSG- bzw. MAG-Verfahren schweißbar sind. Eine weitere Aufgabe der Erfindung ist es, insbesondere bei korrosionsbeständigen Legierungen die hohe Korrosionsbeständigkeit des Grundwerkstoffes auch in der Schweißnaht zu erreichen.

Diese Aufgaben werden erfindungsgemäß dadurch gelöst, dass das Schutzgas neben Argon und Stickstoff, welcher im Schutzgas zwischen 1 und 20 Vol.-% enthalten ist,
a) im Falle, dass das Schutzgas kein Helium enthält, Kohlendioxid mit einem Anteil zwischen 0,001 Vol.-% und 0,9 Vol.-%
   und
b) im Falle, dass das Schutzgas zusätzlich auch Helium enthält, Kohlendioxid mit einem Anteil zwischen 0,001 und 0,5 Vol.-%
enthält.

Vorteilhafte Ausführungen, Ausgestaltungen und Weiterbildung der Erfindung, insbesondere Zusammensetzungen von bevorzugt geeigneten Gasen sind Gegenstände der Unteransprüche.

Vorteilhafterweise kann das Schutzgas neben Argon und Stickstoff, welcher im Schutzgas zwischen 1 und 20 Vol.-% enthalten ist,
a) im Falle, dass das Schutzgas kein Helium enthält, Kohlendioxid mit einem Anteil zwischen 0,01 und 0,5 Vol.-%
   und
b) im Falle, dass das Schutzgas zusätzlich auch Helium enthält, Kohlendioxid mit einem Anteil zwischen 0,01 und 0,45 Vol.-%
enthalten.

Unter Helium-freiem Schutzgas wird dabei verstanden, dass das Schutzgas bis auf mögliche Verschmutzungen bzw. Verunreinigungen kein Helium aufweist.

Vorteilhafterweise enthält das Schutzgas zwischen 0,01 und 0,45 Vol.-% Kohlendioxid, vorzugsweise zwischen 0,01 und 0,1 Vol.-% Kohlendioxid.

Es hat sich als günstig gezeigt, dass das Schutzgas zwischen 1 und 15 Vol.-% Stickstoff, vorzugsweise zwischen 1 und 10 Vol.-%, besonders bevorzugt zwischen 2,5 und 7,5 Vol.-% Stickstoff enthält.

In Weiterbildung der Erfindung enthält das Schutzgas weniger oder gleich 70 Vol.-% Helium. Insbesondere ist günstig, dass das Schutzgas zwischen 1 und 50 Vol.-% Helium, vorzugsweise zwischen 2 und 30 Vol.-% Helium, besonders bevorzugt zwischen 3 und 20 Vol.-% Helium, ganz besonders bevorzugt zwischen 5 und 10 Vol.-% Helium enthält.

Mit Vorteil kann das Schutzgas
- aus einem ternären Gasgemisch mit den Komponenten Argon, Stickstoff und Kohlendioxid,
   oder
- aus einem quaternären Gasgemisch mit den Komponenten Argon, Stickstoff, Kohlendioxid und Helium
bestehen. Dabei werden insbesonder die Anteile an Stickstoff, an Kohlendioxid und gegebenenfalls an Helium entsprechend der oben erwähnten Vorgaben und Intervalle gewählt. Argon bildet bevorzugt den Rest.

Die gestellten Aufgaben werden erfindungsgemäß im Hinblick auf das Verfahren, vorzugsweise ein MSG-Schweißverfahren, insbesondere das MAG-Schweißen, dadurch gelöst, dass ein Schutzgas wie oben beschrieben verwendet wird.

Erfindungsgemäß wird eine Verwendung eines Schutzgasgemisches mit einer Zusammensetzung, die den angeführten Vorgaben Rechnung trägt, für das MSG-Schweißen, insbesondere das MAG-Schweißen, von rostfreien Stählen, insbesondere von Nickelbasiswerkstoffen, Sonderstählen oder von hochlegierten Stählen empfohlen.

Ein erfindungsgemäßes Schweißschutzgas mit hervorragender Eignung stellen ternäre oder quaternäre Gasgemische dar, die
- 500 vpm CO₂,
- 5 Vol.-% N₂,
- ggf. 5 bis 10 Vol.-% He und
- restlich Ar
enthalten.

Mit den erfindungsgemäßen Schutzgasen können hochwarmfeste Nickel-Basis-Legierungen wie z.B. alloy 602CA (Werkstoff-Nr. 2.4633) MAG-geschweißt werden. Dabei sind die mechanisch-technologischen Eigenschaften der Schweißnaht beinahe vollständig erhalten, verglichen mit dem Grundwerkstoff.

Vorteilhaft ist die Anwendung dieses Gasgemisches auch bei hochkorrosionsbeständigen Nickelbasiswerkstoffen, wie z.B. alloy 59 (Werkstoff-Nr. 2.4605), bei dem das erfindunsgemäße Gasgemsich die Korrosionsbeständigkeit der Naht praktisch der des Grundwerkstoffes angleicht.

Das erfindungsgemäße Schutzgas enthält neben Kohlendioxid und Stickstoff Argon und gegebenenfalls Helium. Der CO₂-Anteil dient dabei vermutlich der Lichtbogenstabilisierung und der Vermeidung von Bindefehlern. Der Stickstoffanteil übt vermutlich einen metallurgischen Einfluss aus. Ebenfalls wahrscheinlich ist eine erwünschte Beeinflussung der Stickstoffaufnahme im Schweißgut durch das CO₂.

## Patentansprüche

1. Schutzgas zum Lichtbogenschweißen von metallischen Werkstücken, das Argon und Stickstoff enthält, wobei Stickstoff im Schutzgas zwischen 1 und 20 Vol.-% enthalten ist, **dadurch gekennzeichnet, dass** das Schutzgas daneben
a) im Falle, dass das Schutzgas kein Helium enthält, Kohlendioxid mit einem Anteil zwischen 0,001 Vol.-% und 0,9 Vol.-%
und
b) im Falle, dass das Schutzgas zusätzlich auch Helium enthält, Kohlendioxid mit einem Anteil zwischen 0,001 und 0,5 Vol.-%
enthält.

2. Schutzgas nach Anspruch 1, **dadurch gekennzeichnet, dass** das Schutzgas neben Argon und Stickstoff, welcher im Schutzgas zwischen 1 und 20 Vol.-% enthalten ist,
a) im Falle, dass das Schutzgas kein Helium enthält, Kohlendioxid mit einem Anteil zwischen 0,01 und 0,5 Vol.-%
und
b) im Falle, dass das Schutzgas zusätzlich auch Helium enthält, Kohlendioxid mit einem Anteil zwischen 0,01 und 0,45 Vol.-%
enthält.

3. Schutzgas nach Anspruch 1 oder 2, **dadurch gekennzeichnet, dass** das Schutzgas zwischen 0,01 und 0,45 Vol.-% Kohlendioxid, vorzugsweise zwischen 0,01 und 0,1 Vol.-% Kohlendioxid enthält.

4. Schutzgas nach einem der Ansprüche 1 bis 3, **dadurch gekennzeichnet, dass** das Schutzgas zwischen 1 und 15 Vol-% Stickstoff, vorzugsweise zwischen 1 und 10 Vol.-%, besonders bevorzugt zwischen 2,5 und 7,5 Vol.-% Stickstoff enthält.

5. Schutzgas nach einem der Ansprüche 1 bis 4, **dadurch gekennzeichnet, dass** das Schutzgas weniger oder gleich 70 Vol.-% Helium enthält.

6. Schutzgas nach einem der Ansprüche 1 bis 5, **dadurch gekennzeichnet, dass** das Schutzgas zwischen 1 und 50 Vol.-% Helium, vorzugsweise zwischen 2 und 30 Vol.-% Helium, besonders bevorzugt zwischen 3 und 20 Vol.-% Helium, ganz besonders bevorzugt zwischen 5 und 10 Vol.-% Helium enthält.

7. Schutzgas nach einem der Ansprüche 1 bis 6, **dadurch gekennzeichnet, dass** das Schutzgas aus einem
• ternären Gasgemisch mit den Komponenten Argon, Stickstoff und Kohlendioxid,
oder
• quaternären Gasgemisch mit den Komponenten Argon, Stickstoff, Kohlendioxid und Helium
besteht, wobei Argon bevorzugt den Rest bildet.

8. Verfahren zum Lichtbogenschweißen von metallischen Werkstücken mit abschmelzender Elektrode, wobei ein Schutzgasstrom benachbart zur Elektrode dem Werkstück zugeführt wird, **dadurch gekennzeichnet, dass** ein Schutzgas nach einem der Ansprüche 1 bis 7 verwendet wird.

9. Verwendung eines Schutzgases nach einem der Ansprüche 1 bis 7 für das MSG-Schweißen, insbesondere das MAG-Schweißen, von rostfreien Stählen, insbesondere von Nickelbasiswerkstoffen, Sonderstählen oder von hochlegierten Stählen.

## Claims

1. Shielding gas for the arc-welding of metallic workpieces, which contains nitrogen and argon and nitrogen being contained in the shielding gas between 1 and 20% by volume, **characterized in that**, in addition,
a) in the case where it contains no helium, the said shielding gas comprises carbon dioxide with a proportion of between 0.001% by volume and 0.9% by volume
and
b) in the case where it additionally also contains helium, the said shielding gas comprises carbon dioxide with a proportion of between 0.001 and 0.5% by volume.

2. Shielding gas according to Claim 1, **characterized in that**, apart from argon and nitrogen, which is contained in the shielding gas between 1 and 20% by volume,
a)in the case where it contains no helium, the said shielding gas contains carbon dioxide with a proportion of between 0.01 and 0.5% by volume
and
b)in the case where it additionally also contains helium, the said shielding gas contains carbon dioxide with a proportion of between 0.01 and 0.45% by volume.

3. Shielding gas according to Claim 1 or 2, **characterized in that** the shielding gas contains between 0.01 and 0.4% by volume of carbon dioxide, preferably between 0.01 and 0.1% by volume of carbon dioxide.

4. Shielding gas according to one of Claims 1 to 3, **characterized in that** the shielding gas contains between 1 and 15% by volume of nitrogen, preferably between 1 and 10% by volume, with particular preference between 2.5 and 7.5% by volume of nitrogen.

5. Shielding gas according to one of Claims 1 to 4, **characterized in that** the shielding gas contains less than or equal to 70% by volume of helium.

6. Shielding gas according to one of Claims 1 to 5, **characterized in that** the shielding gas contains between 1 and 50% by volume of helium, preferably between 2 and 30% by volume of helium, with particular preference between 3 and 20% by volume of helium, with most particular preference between 5 and 10% by volume of helium.

7. Shielding gas according to one of Claims 1 to 6, **characterized in that** the shielding gas comprises a
■ ternary gas mixture with the components argon, nitrogen and carbon dioxide, or
■ quaternary gas mixture with the components argon, nitrogen, carbon dioxide and helium,
argon preferably forming the remainder.

8. Method for the arc-welding of metallic workpieces with a consumable electrode, a stream of shielding gas being supplied to the workpiece adjacent to the electrode, **characterized in that** a shielding gas according to one of Claims 1 to 7 is used.

9. Use of a shielding gas according to one of Claims 1 to 7 for the MSG welding, in particular MAG welding, of stainless steels, in particular nickel-based materials, special steels or high-alloy steels.

## Revendications

1. Gaz protecteur pour le soudage à l'arc de pièces métalliques à souder, qui contient de l'argon et de l'azote, l'azote étant contenu dans le gaz protecteur en une proportion comprise entre 1 et 20 % en volume, **caractérisé en ce que** le gaz protecteur contient en outre
a) dans le cas où le gaz protecteur ne contient pas d'hélium, du dioxyde de carbone en une proportion comprise entre 0,001 % en volume et 0,9 % en volume
et
b) dans le cas où le gaz protecteur additionnellement contient également de l'hélium, du dioxyde de carbone en une proportion comprise entre 0,001 et 0,5 % en volume.

2. Gaz protecteur selon la revendication 1, **caractérisé en ce que**, en plus d'argon et d'azote qui est contenu dans le gaz protecteur en une proportion comprise entre 1 et 20 % en volume, le gaz protecteur contient
a) dans le cas où le gaz protecteur ne contient pas d'hélium, du dioxyde de carbone en une proportion comprise entre 0,01 et 0,5 % en volume
et
b) dans le cas où le gaz protecteur additionnellement contient également de l'hélium, du dioxyde de carbone en une proportion comprise entre 0,01 et 0,45 % en volume.

3. Gaz protecteur selon la revendication 1 ou 2, **caractérisé en ce que** le gaz protecteur contient entre 0,01 et 0,45 % en volume de dioxyde de carbone, de préférence entre 0,01 et 0,1 % en volume de dioxyde de carbone.

4. Gaz protecteur selon l'une quelconque des revendications 1 à 3, **caractérisé en ce que** le gaz protecteur contient entre 1 et 15 % en volume d'azote, de préférence entre 1 et 10 % en volume, de façon particulièrement préférée entre 2,5 et 7,5 % en volume d'azote.

5. Gaz protecteur selon l'une quelconque des revendications 1 à 4, **caractérisé en ce que** le gaz protecteur contient 70 % en volume ou moins d'hélium.

6. Gaz protecteur selon l'une quelconque des revendications 1 à 5, **caractérisé en ce que** le gaz protecteur contient entre 1 et 50 % en volume d'hélium, de préférence entre 2 et 30 % en volume d'hélium, de façon particulièrement préférée entre 3 et 20 % en volume d'élium, de façon tout particulièrement préférée entre 5 et 10 % en volume d'hélium.

7. Gaz protecteur selon l'une quelconque des revendications 1 à 6, **caractérisé en ce que** le gaz protecteur consiste en un
• mélange ternaire de gaz comprenant les composants argon, azote et dioxyde de carbone
ou
• mélange quaternaire de gaz comprenant les composants argon, azote, dioxyde de carbone et hélium
de l'argon constituant de préférence le reste.

8. Procédé pour le soudage à l'arc de pièces métalliques à souder, à électrode fusible, dans lequel un flux de gaz protecteur est envoyé à la pièce à souder au voisinage de l'électrode, **caractérisé en ce qu'**on utilise un gaz protecteur selon l'une quelconque des revendications 1 à 7.

9. Utilisation d'un gaz protecteur selon l'une quelconque des revendications 1 à 7, pour le soudage MSG, en particulier le soudage MAG, d'aciers inoxydables, en particulier de matériaux à base de nickel, d'aciers spéciaux ou d'aciers fortement alliés.
